# EUROPÄISCHE PATENTSCHRIFT

(11) **EP 2 473 456 B1**
(45) Veröffentlichungstag und Bekanntmachung des Hinweises auf die Patenterteilung: **13.12.2017**
(21) Anmeldenummer: 10739928.9
(22) Anmeldetag: 03.08.2010
(51) Int. Cl.: C04B 24/30, C07C 59/52, C07D 307/88, C08G 8/28, C08G 12/40

(54) **POLYKONDENSATE MIT ISOBUTYLEN-SEITENKETTE**
POLYCONDENSATES HAVING ISOBUTYLENE SIDE CHAIN
POLYCONDENSATS À CHAÎNE LATÉRALE ISOBUTYLÈNE

(30) Priorität: 01.09.2009 EP 09169130
(43) Veröffentlichungstag der Anmeldung: 11.07.2012
(73) Patentinhaber: Construction Research & Technology GmbH, 83308 Trostberg (DE)
(72) Erfinder: KRAUS, Alexander, 83552 Evenhausen (DE); DIERSCHKE, Frank, 55276 Oppenheim (DE); BECKER, Fabian, 83308 Trostberg (DE)
(74) Vertreter: BASF IP Association
(86) Internationale Anmeldenummer: PCT/EP2010/061286
(87) Internationale Veröffentlichungsnummer: WO 2011/026701

(56) Entgegenhaltungen:
- US-A- 5 856 279
- BIGLOVA R Z ET AL: "Synthesis of new stabilizers through polymer-analogous conversions", OXIDATION COMMUNICATIONS, SCIENTIFIC BULGARIAN COMMUNICATIONS, SOFIA, BG, Bd. 20, Nr. 1, 1. Januar 1997 (1997-01-01) , Seiten 139-144, XP009140808, ISSN: 0209-4541

## Beschreibung

Die vorliegende Erfindung betrifft ein Polykondensationsprodukt mit mindestens einer eine Polyisobutylenseitenkette und einen Aromaten oder Heteroaromaten aufweisenden Struktureinheit sowie mindestens eine weitere aromatische oder heteroaromatische Struktureinheit, welche eine ionische funktionelle Gruppe aufweist, ein Verfahren zu dessen Herstellung sowie dessen Verwendung.

Als Kunststoffe und Lacke besitzen Polykondensationsprodukte auf Basis von Aromaten oder Heteroaromaten und Aldehyden seit langer Zeit eine große Bedeutung. Beispielsweise stellen die Polykondensationsprodukte aus Phenol und Formaldehyd hitzestabile Werkstoffe da, welche nach ihrem Entdecker Baekeland (1909) als Bakelite bezeichnet werden. Bakelite waren die ersten industriell produzierten Kunststoffe. Weiterhin lassen sich beispielsweise spezielle Phenol-Formaldehyd-Kondensate, welche unter den Handelsnamen Wolfatite oder Levatite bekannt sind, als lonentauscher verwenden.

Die DE 2354995 beschreibt die Verwendung von Polykondensaten als Schmiermitteladditive. Bezüglich der Herstellung wird die Kondensation von Alkylphenolen mit Aldehyden offenbart, wobei die eingesetzten Aldehyde Säure- oder Estergruppen aufweisen. Als Alkylphenole werden auch Polyisobutylen-substituierte Phenole eingesetzt.

Es ist aus der WO 2006/042709 bekannt Polykondensationprodukte auf Basis einer aromatischen oder heteroaromatischen Verbindung mit 5 bis 10 C-Atomen bzw. Heteroatomen mit mindestens einem Oxyethylen- oder Oxypropylen-Rest und Aldehyden ausgewählt aus der Gruppe Formaldehyd, Glyoxylsäure und Benzaldehyd als Dispergiermittel für anorganische Bindemittel-Suspensionen zu verwenden.

Derartige Polykondensationsprodukte ermöglichen eine Reduktion des Wasseranteils in zementären Bindemittelsystemen. Hierdurch kann eine höhere Druckfestigkeit und ein dichteres Gefüge der ausgehärteten Bindemittelmatrix erzielt werden. Ein möglichst dichtes Gefüge ist von großer Bedeutung für die Dauerhaftigkeit von Betonbauwerken, da dadurch der Stofftransport durch die Bindmittelmatrix erschwert und der Bewehrungsstahl vor Korrosion geschützt wird. Hinsichtlich des Stands der Technik ist eine weitere Verbesserung der Dauerhaftigkeit von Betonbauwerken von großem Interesse.

Aufgabe der vorliegenden Erfindung war es deshalb, ein Zusatzmittel für zementäre Bindemittelsysteme zu entwickeln, welches die Dauerhaftigkeit von Betonbauwerken weiter erhöht und insbesondere den Bewehrungsstahl vor Korrosion schützt.

Die Lösung dieser Aufgabe ist ein Polykondensationsprodukt auf Basis von Aromaten und/oder Heteroaromaten und Aldehyden, wobei es mindestens eine eine Polyisobutylenseitenkette und einen Aromaten oder Heteroaromaten aufweisende Struktureinheit (I) sowie mindestens eine eine ionisierbare, funktionelle Gruppe und einen Aromaten oder Heteroaromaten aufweisende Struktureinheit (II) enthält, wobei Struktureinheit (I) ungleich Struktureinheit (II) ist und der eingesetzte Aldehyd keine Säure oder Esterfunktionen aufweist.

Es wurde gefunden, dass die erfindungsgemäßen Fließmittel zum einen den Wasserbedarf von zementären Bindemittelsystemen reduzieren und somit in bekannter Weise ein dichteres Gefüge der ausgehärteten Bindemittelmatrix erzeugen. Weiterhin werden durch das erfindungsgemäße Polykondensat aber auch Transportvorgänge von gelösten, insbesondere ionischen Substanzen in der Bindemittelmatrix überraschend stark reduziert, wodurch Bewehrungsstahl effektiv vor Korrosion geschützt wird. Insbesondere überraschend war hierbei, dass die Verarbeitbarkeit des Frischbetons durch die hydrophoben Eigenschaften der Polyisobutylenseitenketten des Polykondensationsproduktes nicht negativ beeinflusst wird.

Die Polyisobutylenseitenkette der Struktureinheit (I) besitzt in einer bevorzugten Ausführungsform mindestens drei Isobutylen-Einheiten, insbesondere zwischen 3 und 200 Isobutylen-Einheiten, besonders bevorzugt zwischen 4 und 100 Isobutylen-Einheiten und insbesondere bevorzugt zwischen 4 und 50 Isobutylen-Einheiten.

In einer bevorzugten Ausführungsform enthält das erfindungsgemäße Polykondensationsprodukt die Struktureinheit (I) in einer Menge zwischen 0,01 und 99,9 Gew.-%, bevorzugt zwischen 1,0 und 99,0 Gew.-%, insbesondere zwischen 2,0 und 95,0 Gew.-% und besonders bevorzugt zwischen 5,0 und 90,0 Gew.-% und die Struktureinheit (II) in einer Menge zwischen 0,01 und 99,9 Gew.-%, bevorzugt zwischen 1,0 und 99,0 Gew.-%, insbesondere zwischen 2,0 und 95,0 Gew.-% und besonders bevorzugt zwischen 5,0 und 90,0 Gew.-%

Die Struktureinheit (I) wird insbesondere durch folgende allgemeine Formel repräsentiert 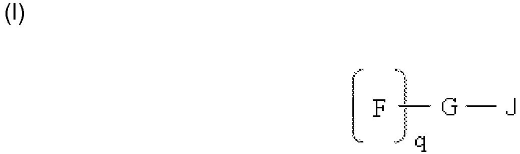
mit
   G gleich oder verschieden sowie repräsentiert durch eine substituierte oder unsubstituierte aromatische oder heteroaromatische Verbindung mit 4 bis 12 C-Atomen, bevorzugt 5 bis 10 C-Atomen, bevorzugt Phenol, Benzol, Methylbenzol, Cresol, Resorcinol, Nonylphenol, Methoxyphenol, Naphthol, Methylnaphthol, Butylnaphthol, Bisphenol A, Anilin, Methylanilin, Hydroxyanilin, Methoxyanilin, Furfurylalkohol und Salicylsäure
mit
   q = 0 bis 4
mit
   F unabhängig voneinander gleich oder verschieden sowie repräsentiert durch OH, OR¹, NH₂, NHR¹, NR¹₂, C₁-C₁₀-Alkyl, SO₃H, COOH, PO₃H₂, OPO₃H₂, wobei die C₁-C₁₀-Alkylreste wiederum Phenyl- oder 4-Hydroxyphenyl-Reste besitzen können und R¹ einen C₁-C₄-Rest bedeutet
mit
   J gleich oder verschieden sowie repräsentiert durch eine Polyisobutylenseitenkette, insbesondere mit mindestens drei Isobutylen-Einheiten, bevorzugt zwischen 3 und 200 Isobutylen-Einheiten, insbesondere bevorzugt zwischen 4 und 100 Isobutylen-Einheiten und besonders bevorzugt zwischen 4 und 50 Isobutylen-Einheiten.

Unter den substituierten oder unsubstituierten aromatischen oder heteroaromatischen Verbindungen mit 4 bis 12 C-Atomen, bevorzugt 5 bis 10 C-Atomen, der Struktur G in Formel (I) soll die Anzahl an Kohlenstoffatomen verstanden werden, welche sich in dem oder den aromatischen oder heteroaromatischen Ringsystem(en) befinden. Eventuell im Falle von substituierten aromatischen oder heteroaromatischen Verbindungen vorhandene Substituenten an der Struktureinheit G, sollen nicht zur Berechnung der Anzahl C-Atome herangezogen werden.
Beispielsweise wäre nach obiger Definition die Anzahl C-Atome bei Nonylphenol und Methoxyphenol 6, bei Bisphenol A 12 und bei Furfurylalkohol 4.

Als besonders bevorzugter Vertreter handelt es sich bei der Struktureinheit (I) um 4-Polyisobutylenphenol.

Bei der ionisierbaren, funktionellen Gruppe der Struktureinheit (II) des Polykondensationsprodukt handelt es sich bevorzugt um mindestens eine aus der Reihe SO₃H, COOH, PO₃H₂, Dialkylamin, Trialkylammonium und OPO₃H₂, insbesondere bevorzugt um SO₃H, OPO₃H₂ und/oder einen Phosphorsäurediester.

In einer bevorzugten Ausführungsform wird die Struktureinheit (II) durch folgende allgemeine Formeln repräsentiert

(II) L-Q-O-M

Q gleich oder verschieden sowie repräsentiert durch eine substituierte oder unsubstituierte aromatische oder heteroaromatische Verbindung mit 4 bis 12 C-Atomen, bevorzugt 5 bis 10 C-Atomen
L gleich oder verschieden sowie repräsentiert durch eine ionisierbare funktionelle Gruppe aus der Reihe SO₃H, COOH, PO₃H₂, OPO₃H₂, Dialkylamin oder Trialkylammonium
O gleich Sauerstoff
M gleich oder verschieden sowie repräsentiert durch H, einen C₁- bis C₁₀-Alkylrest, C₁-bis C₁₀-Hydroxyalkylrest, C₁- bis C₁₀-Carbonsäure, Arylrest oder Heteroarylrest.

Unter den substituierten oder unsubstituierten aromatischen oder heteroaromatischen Verbindungen mit 4 bis 12 C-Atomen, bevorzugt 5 bis 10 C-Atomen, der Struktur Q in der Struktureinheit (II) soll die Anzahl an Kohlenstoffatomen verstanden werden, welche sich in dem oder den aromatischen oder heteroaromatischen Ringsystem(en) befinden.

Eventuell im Falle von substituierten aromatischen oder heteroaromatischen Verbindungen vorhandene Substituenten an der Struktureinheit Q, sollen nicht zur Berechnung der Anzahl C-Atome herangezogen werden.

In einer weiterhin bevorzugten Ausführungsform wird die Struktureinheit (II) bevorzugt durch folgende allgemeine Formeln repräsentiert 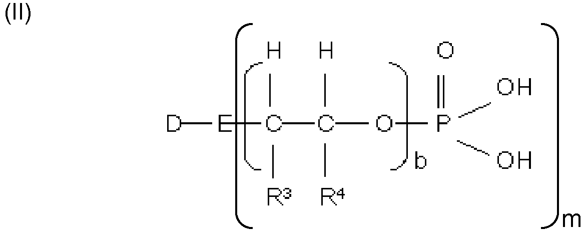
mit
   D gleich oder verschieden sowie repräsentiert durch eine substituierte oder unsubstituierte aromatische oder heteroaromatische Verbindung mit 4 bis 12 C-Atomen, bevorzugt 5 bis 10 C-Atomen
mit
   E gleich oder verschieden sowie repräsentiert durch N, NH oder O
mit
   m = 2 falls E = N und m = 1 falls E = NH oder O
mit
   R³ und R⁴ unabhängig voneinander gleich oder verschieden sowie repräsentiert durch einen verzweigten oder unverzweigten C₁- bis C₁₀-Alkylrest, C₅- bis C₈-Cycloalkylrest, Arylrest, Heteroarylrest oder H
mit b
   gleich oder verschieden sowie repräsentiert durch eine ganze Zahl von 0 bis 300.

Unter den substituierten oder unsubstituierten aromatischen oder heteroaromatischen Verbindungen mit 4 bis 12 C-Atomen, bevorzugt 5 bis 10 C-Atomen, der Struktur D in der allgemeinen Formel (II) soll die Anzahl an Kohlenstoffatomen verstanden werden, welche sich in dem oder den aromatischen oder heteroaromatischen Ringsystem(en) befinden.

Eventuell im Falle von substituierten aromatischen oder heteroaromatischen Verbindungen vorhandene Substituenten an der Struktur D, sollen nicht zur Berechnung der Anzahl C-Atome herangezogen werden.

Insbesondere kann es sich bei der Struktureinheit (II) um Phenoxyethanolphosphat, N-Phenyldiethanolamindiphosphat, Anisolsulfonsäure, Phenoxyethanolsulfonsäure, Phenolsulfonsäure, Phenoxyessigsäure oder Phenoxypropionsäure handeln.

Um die Eigenschaften der erfindungsgemäßen Produkte dem jeweiligen Einsatzzweck anzupassen, kann es vorteilhaft sein, weitere Struktureinheiten einzupolymerisieren. Insbesondere kann es sich hierbei um mindestens eine eine Polyetherseitenkette und einen Aromaten oder Heteroaromaten aufweisende Struktureinheit (III) handeln.

Die Struktureinheit (III) wird bevorzugt durch folgende allgemeine Formeln repräsentiert 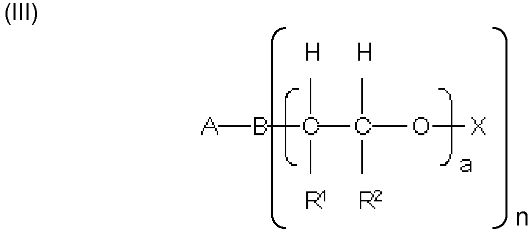
mit
   A gleich oder verschieden sowie repräsentiert durch eine substituierte oder unsubstituierte aromatische oder heteroaromatische Verbindung mit 4 bis 12 C-Atomen, bevorzugt 5 bis 10 C-Atomen
mit
   B gleich oder verschieden sowie repräsentiert durch N, NH oder O
mit
   n = 2 falls B = N und n = 1 falls B = NH oder O
mit
   R¹ und R² unabhängig voneinander gleich oder verschieden sowie repräsentiert durch einen verzweigten oder unverzweigten C₁- bis C₁₀-Alkylrest, C₅- bis C₈-Cycloalkylrest, Arylrest, Heteroarylrest oder H
mit
   a gleich oder verschieden sowie repräsentiert durch eine ganze Zahl von 1 bis 300
mit X
   gleich oder verschieden sowie repräsentiert durch einen verzweigten oder unverzweigten C₁- bis C₁₀-Alkylrest, C₅- bis C₈-Cycloalkylrest, einen verzweigten oder unverzweigten C₁- bis C₁₀-Carbonsäureesterrest, Arylrest, Heteroarylrest oder H.

Unter den substituierten oder unsubstituierten aromatischen oder heteroaromatischen Verbindungen mit 4 bis 12 C-Atomen, bevorzugt 5 bis 10 C-Atomen, der Struktur A in der allgemeinen Formel (III) soll die Anzahl an Kohlenstoffatomen verstanden werden, welche sich in dem oder den aromatischen oder heteroaromatischen Ringsystem(en) befinden.

Eventuell im Falle von substituierten aromatischen oder heteroaromatischen Verbindungen vorhandene Substituenten an der Struktur A, sollen nicht zur Berechnung der Anzahl C-Atome herangezogen werden.

Bei dem Aromaten oder Heteroaromaten der Struktureinheit (II) und (III) handelt es sich bevorzugt um Phenyl, 2-Hydroxyphenyl, 3-Hydroxyphenyl, 4-Hydroxyphenyl, 2-Methoxyphenyl, 3-Methoxyphenyl, 4-Methoxyphenyl, Naphthyl, 2-Hydroxynaphthyl, 4-Hydroxynaphthyl, 2-Methoxynaphthyl, 4-Methoxynaphthyl bevorzugt Phenyl, wobei diese ggf. unabhängig voneinander gewählt werden können und auch jeweils aus einem Gemisch der genannten Verbindungen bestehen können.

Die Reste R³, R⁴ und ggf. R¹ und R² in den Struktureinheiten (II) und (III) können unabhängig voneinander gewählt werden und werden bevorzugt durch H, Methyl, Ethyl oder Phenyl, besonders bevorzugt durch H oder Methyl und insbesondere bevorzugt durch H repräsentiert.

Bevorzugt wird a in Struktureinheit (III) durch eine ganze Zahl von 5 bis 280, insbesondere 10 bis 160 und besonders bevorzugt 12 bis 120 repräsentiert und b in Struktureinheit (II) durch eine ganze Zahl von 0 bis 10, bevorzugt 1 bis 7 und besonders bevorzugt 1 bis 5. Die jeweiligen Reste, deren Länge durch a bzw. b definiert wird, können hierbei aus einheitlichen Baugruppen bestehen, es kann aber auch zweckmäßig sein, dass es sich um eine Mischung aus unterschiedlichen Baugruppen handelt. Weiterhin können die Reste der Struktureinheiten (II) und ggf. (III) unabhängig voneinander jeweils die gleiche Kettenlänge besitzen, wobei a bzw. b jeweils durch eine Zahl repräsentiert wird. Es wird aber in der Regel zweckmäßig sein, dass es sich ggf. jeweils um Mischungen mit unterschiedlichen Kettenlängen handelt, so dass die Reste der Struktureinheiten im Polykondensationsprodukt für a und unabhängig für b unterschiedliche Zahlenwerte aufweisen.

Als in der Polykondensation eingesetzte Aldehyde eignen sich insbesondere Formaldehyd, Acetaldehyd, Trichloracetaldehyd. Propionaldehyd, Butyraldehyd, Isobutyraldehyd, Isononylaldehyd und Dodecanal, aromatische Aldehyde wie Benzaldehyd und Naphthylaldehyd und Verbindungen, die solche Aldehyde unter den Reaktionsbedingungen freisetzen können, wie z. B. Trioxan, Hexamethylentetramin oder Paraformaldehyd, die trimeren und tetrameren Formen des Acetaldehyds sowie Dialkylacetale. Insbesondere geeignet ist Paraformaidehyd.

In einer bevorzugten Ausführungsform enthält das Polykondensationsprodukt somit eine weitere Struktureinheit (IV), welche durch folgende Formel repräsentiert wird 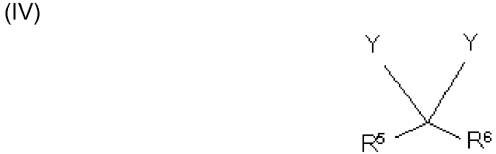
mit
   Y unabhängig voneinander gleich oder verschieden und repräsentiert durch (I), (II) oder weitere Bestandteile des Polykondensationsproduktes
mit
   R⁵ gleich oder verschieden und repräsentiert durch H, CH₃ oder eine substituierte oder unsubstituierte aromatische oder heteroaromatische Verbindung mit 5 bis 10 C-Atomen
mit
   R⁶ gleich oder verschieden und repräsentiert durch H, CH₃ oder eine substituierte oder unsubstituierte aromatische oder heteroaromatische Verbindung mit 5 bis 10 C-Atomen.

Hierbei werden R⁵ und R⁶ in Struktureinheit (IV) unabhängig voneinander bevorzugt durch H und/oder Methyl repräsentiert.

In der Regel liegt das erfindungsgemäße Polykondensationsprodukt in wässriger Lösung vor, die 2 bis 90 Gew.-% Wasser und 98 bis 10 Gew.-% gelöste Trockenmasse, bevorzugt 40 bis 80 Gew.-% Wasser und 60 bis 20 Gew.-% gelöste Trockenmasse, besonders bevorzugt 45 bis 75 Gew.-% Wasser und 55 bis 25 Gew.-% gelöste Trockenmasse enthält. Die Trockenmasse besteht dann im Wesentlichen aus dem wasserfreien Polykondensationsprodukt, wobei aber auch vorteilhaft weitere Komponenten wie Entschäumer und andere Hilfsmittel enthalten sein können.

Die Hydrophobizität des erfindungsgemäßen Polykondensationsproduktes kann je nach Einsatzzweck eingestellt werden. Hierzu eignet sich neben der Wahl der Kettenlänge der Polyisobutylenseitenkette insbesondere das Molverhältnis zu den Einkondensieren Struktureinheiten (II) und ggf. (III). Insgesamt können die molaren Verhältnisse der Struktureinheiten (I), (II), (IV) und ggf. (III) des erfindungsgemäßen Polykondensationsproduktes in weiten Bereichen variiert werden. Als zweckmäßig hat es sich erwiesen, dass das Molverhältnis der Struktureinheiten [(I) + (II) + (III)] : (IV) 1 : 0,8 bis 3, bevorzugt 1 : 0,9 bis 2 und besonders bevorzugt 1: 0,95 bis 1,2 beträgt, wobei (III) den Wert Null annehmen kann.

Das Molverhältnis der Struktureinheiten (I) : [(II) + (III)] liegt insbesondere bei 1 : 100 bis 100 : 1, bevorzugt bei 1 : 7 bis 5 : 1 und besonders bevorzugt bei 1 : 5 bis 3 : 1, wobei (III) auch den Wert Null annehmen kann.

In einer weiteren Ausführungsform kann das Molverhältnis der Struktureinheiten (II) : (III) auf 1 : 0,005 bis 1 : 10, weiterhin 1 : 0,01 bis 1 : 1, insbesondere 1 : 0,01 bis 1 : 0,2 und besonders bevorzugt 1 : 0,01 bis 1 : 0,1 eingestellt werden.

Häufig weist das erfindungsgemäße Polykondensationsprodukt ein gewichtsmittleres Molekulargewicht von 4000 g/mol bis 150.000 g/mol, vorzugsweise 10.000 bis 100.000 g/mol und besonders bevorzugt 20.000 bis 75.000 g/mol auf.
Die vorliegende Erfindung betrifft auch ein Verfahren zur Herstellung eines Polykondensationsproduktes, wobei die Reaktionsmischung enthaltend mindestens ein aromatisches und/oder heteroaromatisches Monomer mit mindestens einer Polyisobutylenseitenkette, mindestens ein Monomer umfassend eine aromatische und/oder heteroaromatische Gruppe und mindestens eine ionisierbare, funktionelle Gruppe und mindestens ein Monomer umfassend eine Aldehydgruppe in Gegenwart eines Katalysators polykondensiert wird und der Wassergehalt des nach der Polykondensation erhaltenen Produktes bevorzugt bei weniger als 30 Gew.-%, bevorzugt weniger als 20 Gew.-% und besonders bevorzugt bei weniger als 6 Gew.-% liegt.

Der Wassergehalt der Reaktionsmischung hat sich als wichtiger Parameter erwiesen, wobei niedrige Wassergehalte zu besseren Ergebnissen bei der Polykondensation führen. Hohe Wassergehalte können eine Polykondensation sogar gänzlich unterdrücken. Bevorzugt werden deshalb Monomere eingesetzt die kein Wasser enthalten, beispielsweise Paraformaldehyd. Eine weitere Möglichkeit besteht darin, das eingesetzte oder während der Kondensation entstehende Wasser durch azeotrope Destillation zu entfernen, wobei sich als Schlepper insbesondere Toluol und Benzol eignen.

In der Regel wird die Polykondensation in Gegenwart eines sauren Katalysators durchgeführt, wobei es sich hierbei bevorzugt um Sulfonsäure, insbesondere gesättigte und ungesättigte Alkylsulfonsäuren wie Methansulfonsäure, Octylsulfonsäure, Dodecylsulfonsäure, Vinylsulfonsäure und/oder Allylsulfonsäure sowie aromatische Sulfonsäuren wie Para-Toluolsulfonsäure, Benzolsulfonsäure, und/oder Dodecylbenzolsulfonsäure handelt.

Die Polykondensation wird vorteilhaft bei einer Temperatur zwischen 20 und 140°C und einem Druck zwischen 1 und 10 bar durchführt. Insbesondere hat sich ein Temperaturbereich zwischen 50 und 120°C als zweckmäßig erwiesen. Die Reaktionsdauer kann je nach Temperatur, der chemischen Natur der eingesetzten Monomeren und dem angestrebten Vernetzungsgrad zwischen 0,1 und 24 Stunden betragen. Wenn der gewünschte Vernetzungsgrad erreicht ist, was beispielsweise auch über die Messung der Viskosität der Reaktionsmischung bestimmt werden kann, wird die Reaktionsmischung abgekühlt.

Gemäß einer besonderen Ausführungsform wird das Reaktionsgemisch nach Abschluss der Kondensationsreaktion einer thermischen Nachbehandlung bei einem pH zwischen 8 und 13 und einer Temperatur zwischen 60 und 130°C unterworfen. Durch die thermische Nachbehandlung, die vorteilhaft zwischen 5 Minuten und 5 Stunden dauert, ist es möglich, den Aldehydgehalt, insbesondere den Formaldehydgehalt in der Reaktionslösung deutlich zu erniedrigen.

In einer weiteren besonderen Ausführungsform sieht die vorliegende Erfindung vor, dass man zur Reduzierung des Aldehydgehalts das Reaktionsgemisch nach Abschluss der Kondensationsreaktion einer Vakuum-Nachbehandlung bei Drücken zwischen 10 und 900 mbar unterwirft. Des Weiteren sind aber auch andere, dem Fachmann bekannte Methoden zur Reduzierung des Formaldehyd-Gehalts einsetzbar. Ein Beispiel ist die Zugabe geringer Mengen Natriumbisulfit, Ethylenharnstoff und/oder Polyethylenimin.

Die erhaltenen Polykondensationsprodukte können direkt als Additiv für hydraulische Bindemittel eingesetzt werden. Um eine bessere Lagerstabilität und bessere Produkteigenschaften zu erhalten, ist es vorteilhaft, die Reaktionslösungen mit basischen Verbindungen zu behandeln. Es ist deshalb als bevorzugt anzusehen, die Reaktionsmischung nach Beendigung der Reaktion mit einer basischen Natrium-, Kalium-, Magnesium-, Aluminium-, Zink-, Ammonium- oder Calcium-Verbindung umzusetzen. Natriumhydroxid, Kaliumhydroxid, Magnesiumhydroxid, Aluminiumhydroxid, Zinkhydroxid, Ammoniumhydroxid oder Calciumhydroxid haben sich hierbei als besonders zweckmäßig erwiesen, wobei es als bevorzugt anzusehen, ist das Reaktionsgemisch zu neutralisieren. Als Salze der phosphatierten Polykondensationsprodukte kommen aber auch andere Alkali- und Erdalkalimetallsalze sowie Salze organischer Amine in Frage.

Bevorzugt sind die Polykondensationsprodukte dadurch gekennzeichnet, dass das Polykondensationsprodukt mit einer basischen Verbindung behandelt wird, besonders bevorzugt neutralisiert wird. Insbesondere bevorzugt liegt das Polykondensationsprodukt nach der Behandlung mit einer basischen Verbindung ganz oder teilweise in seiner Salzform vor, insbesondere bevorzugt in seiner Alkali-, und/oder Erdalkalisalzform. Weiterhin sieht die vorliegende Erfindung aber auch die Herstellung von Mischsalzen der phosphatierten Polykondensationsprodukte vor. Diese können zweckmäßig durch die Umsetzung der Polykondensationsprodukte mit mindestens zwei basischen Verbindungen hergestellt werden.

So können durch eine gezielte Auswahl geeigneter Alkali- und/oder ErdalkaliMetallhydroxide durch Neutralisation Salze der erfindungsgemäßen Polykondensationsprodukte hergestellt werden, mit denen die Dauer der Verarbeitbarkeit wässriger Suspensionen von anorganischen Bindemitteln und insbesondere von Beton beeinflusst werden kann. Während im Fall des Natriumsalzes eine Verringerung der Verarbeitbarkeit über die Zeit zu beobachten ist, findet im Fall des Calciumsalzes des identischen Polymers eine komplette Umkehrung dieses Verhaltens statt, wobei zu Beginn eine geringere Wasserreduktion (geringer Slump) auftritt, welcher mit der Zeit zunimmt. Dies führt dazu, dass Natriumsalze der phosphatierten Polykondensationsprodukte über die Zeit zu einer Abnahme der Verarbeitbarkeit der bindemittehaltigen Masse, wie z.B. Beton oder Mörtel führen, während die entsprechenden Calciumsalze mit der Zeit zu einer verbesserten Verarbeitbarkeit führen. Durch eine geeignete Wahl der Menge an eingesetzten Natrium- und Calciumsalzen der phosphatierten Polykondensationsprodukte kann somit die Entwicklung der Verarbeitbarkeit von bindemittehaltigen Massen über die Zeit gesteuert werden. Zweckmäßig werden die entsprechenden phosphatierten Polykondensationsprodukte, welche aus Natrium- und Calciumsalzen bestehen, durch Umsetzung mit einer Mischung aus basischen Calcium- und Natriumverbindungen, insbesondere Calciumhydroxid und Natriumhydroxid, hergestellt.

Bei den erfindungsgemäßen Polykondensationsprodukten hat es sich als besonders vorteilhaft erwiesen, dass diese über ein sehr kostengünstiges Verfahren hergestellt werden können, wobei keine weitere Aufreinigung von Zwischenstufen notwendig ist. Insbesondere entstehen bei dem erfindungsgemäßen Verfahren keine Abfallstoffe die entsorgt werden müssen. Somit stellt das beanspruchte Verfahren auch aus Umweltgesichtspunkten einen weiteren Fortschritt des Stands der Technik dar. Die erhaltene Reaktionsmischung kann direkt dem Verwendungszweck zugeführt werden. Die zu Grunde liegende Aufgabenstellung ein Zusatzmittel für zementäre Bindemittelsysteme zu entwickeln, welches die Dauerhaftigkeit von Betonbauwerken weiter erhöht und insbesondere den Bewehrungsstahl vor Korrosion schützt, wird somit in vollem Umfang gelöst.

Die vorliegende Erfindung soll im Folgenden näher anhand von Ausführungsbeispielen beschrieben werden.

### Beispiele

Allgemeine Vorschrift zur Herstellung der Polykondensate

Ein mit Rührer ausgestatteter Reaktor wird auf 95 °C Innentemperatur aufgeheizt und mit den Edukten 1 und 2 und ggf. Polyisobutylen-Phenol (PiB-Phenol) gemäß Tabelle 1 befüllt und das Rührwerk eingeschaltet (100 Umdrehungen/Minute). Sobald das Reaktionsgemisch eine Temperatur von 90 °C erreicht hat, wird der Katalysator zugegeben. Die Manteltemperatur des Reaktors wird nun auf 130 °C erhöht. Sobald das Reaktionsgemisch eine Temperatur von 100 °C erreicht hat, wird der Edukt 3 zugegeben. Man lässt nun 4 Std. bei 120 °C Innentemperatur unter Rühren weiterreagieren, wobei ein deutlicher Viskositätsanstieg festzustellen ist. Anschließend wird das Reaktionsgemisch abgekühlt. Sobald eine Innentemperatur von 100°C erreicht ist, werden bezogen auf die Gesamtmasse 10 Gew.-% Wasser zugegeben und es wird noch 30 min gerührt. Anschließend werden bis zu 3 mol-Äquivalente 50 %ige Natronlauge bezogen auf Edukt 2 zugegeben. (In den unten aufgeführten Beispielen werden jeweils 2 mol-Äquivalente 50 %ige Natronlauge verwendet). Nachdem die Natronlauge gleichmäßig eingemischt ist, wird mit Wasser auf 50 Gew.-% Feststoffgehalt verdünnt. Die erfindungsgemäßen Polykondensate liegen als weiße bis gelblichweiße Emulsion vor.
Als Referenz dient ein Fließmittel gemäß WO 2006/042709, welches keine PiB-Phenole enthält.

**Tabelle 1**

| Beispiel | PiB-Phenol Typ / [g] | Edukt 1 Typ / [g] | Edukt 2 Typ / [g] | Edukt 3 Typ / [g] | Katalysator Typ / [g] |
|---|---|---|---|---|---|
| Referenz | -/- | C / 165 | D / 28,8 | F / 5,5 | G / 13 |
| 1 | A / 6,1 | B / 321 | D / 84,7 | E / 11,4 | G / 19 |
| 2 | A / 13,1 | B / 217 | D / 84,7 | F / 11,3 | H / 15 |
| 3 | A / 12,5 | B / 216 | D / 84,2 | E / 11,3 | G / 19 |
| 4 | A / 18 | B / 204 | D / 84,2 | E / 11,3 | G / 19 |
| 5 | A / 24,1 | B / 192,5 | D / 84,5 | E / 11,4 | G / 19 |
| 6 | A / 42,1 | B / 156,5 | D / 84,5 | E / 11,4 | G / 19 |
| 7 | A / 60 | B / 121 | D / 84,6 | E / 11,3 | G / 19 |
| 8 | A / 4,55 | C / 127,6 | D / 26,4 | E / 3,3 | G / 8,8 |

| | | | | | |
|---|---|---|---|---|---|
| A = PiB-Phenol (CAS-Nr.: 112375-88-9) mit einem mittleren Molekulargewicht von ca. 1000 g/mol. B = Polyethylenglycolmonophenylether (CAS-Nr.: 9004-78-8) mit einem mittleren Molekulargewicht von ca. 2000 g/mol. C = Polyethylenglycolmonophenylether (CAS-Nr.: 9004-78-8) mit einem mittleren Molekulargewicht von ca. 5000 g/mol. D = Polyethylenglycolmonophenylether-Phosphorsäureester (CAS-Nr.: 39464-70-5) mit einem mittleren Molekulargewicht von ca. 350 g/mol. E = Trioxan, F = Paraformaldehyd, G = Methansulfonsäure, H = Schwefelsäure | | | | | |

### Austestung der verflüssigenden Wirkung der Polykondensate in Frischbeton

Die Durchführung der Tests erfolgte gemäß DIN EN 206-1, DIN EN 12350-2 und DIN EN 12350-5. Zement: CEM I 42,5 R Bernburg (330 kg/m³ Beton). Die Dosierung der Fließmittel wurde so gewählt, dass der Frischbeton ein anfängliches Ausbreitmaß von 60±2cm aufwies. Die Dosierungsangaben beziehen sich auf den Wirkstoffgehalt pro Einsatzmenge Zement. Die Ergebnisse sind in Tabelle 2 zusammengefasst.

**Tabelle 2**

| CEM [kg] | H₂O [l/m³] | w/z | Fließmittel | Dosierung bez. Zement | Temp. Beton [°C] | Ausbreitmaß in [cm] | | | |
|---|---|---|---|---|---|---|---|---|---|
| | | | | | | 0 min | 10 min | 30 min | 60 min |
| 330 | 158,4 | 0,48 | Referenz | 0,18% | 20,7 | 59,5 | 54 | 41 | 35 |
| 330 | 158,4 | 0,48 | 8 | 0,22% | 21,1 | 61,5 | 53 | 37,5 | 34,5 |
| 330 | 158,4 | 0,48 | 4 | 0,24% | 21 | 60,5 | 49 | 35 | 33 |
| 330 | 158,4 | 0,48 | 7 | 0,24% | 20,8 | 58,5 | 53 | 38 | 35 |

| | | | | | | | | | |
|---|---|---|---|---|---|---|---|---|---|
| Zement (CEM): Bernburg CEM I 42,5 R | | | | | | | | | |

Man erkennt, dass die erfindungsgemäßen Polymere prinzipiell in der Lage sind eine vergleichbare Verflüssigungswirkung zu entfalten wie das Referenzfließmittel ohne Polyisobutylen-Seitenketten.

### Austestung der hydrophobierenden Wirkung der Polykondensate in Mörtelprismen

### 1. Kurzbeschreibung des Verfahrens

Wird Beton in Wasser getaucht, so wird das Wasser durch die im Beton vorhandenen Kapillarporen in den Beton hinein gesaugt. Durch den Versuch "kapillare Wasseraufnahme" kann beurteilt werden, wie sich ein Baustoff bezüglich der Wasseraufnahme und dem Stofftransport verhält.

In DIN EN ISO 15148, 2003-03, "Bestimmung des Wasseraufnahmekoeffizienten bei teilweisem Eintauchen", und in Heft 422 des Deutschen Ausschuss für Stahlbeton (DAfStb), "Prüfung von Beton - Empfehlungen und Hinweise als Ergänzung zu DIN 1048", 1991, sind weitergehende Angaben zum Verfahren, zur Auswertung und zur Bewertung der Ergebnisse zu finden.

Wird die Wasseraufnahme und damit auch der Stofftransport durch die Bindmittelmatrix erschwert, führt dies beim Einsatz in der Praxis auch dazu, dass Bewehrungsstahl in Bauwerken vor Korrosion geschützt wird.

### 2. Probekörper

Mit Hilfe eines Aufsatzrahmens wurden Mörtelprismen mit den Maßen 40 mm x 40 mm x 160 mm hergestellt. Zur Minimierung von Fehlern wurden mit jedem Fließmittel jeweils sechs Mörtelprismen hergestellt. Zur Herstellung der Prismen wurde ein Mörtel aus Karlstadt CEM I 42,5R und Normensand mit w/z = 0,5 und s/z = 2,8 verwendet. Die Fließmittel wurden jeweils mit einer Dosierung von 0,2 Gew.-% Wirkstoff bezogen auf Zement eingesetzt.

### 3. Vorlagerung

Für eine Dauer von (24 ± 2) h nach Herstellung wurden die Probekörper in der Form im Feuchtschrank bei (20,0 ± 2,0) °C gelagert. Nach dem Ausschalen wurden die Prismen je Seite 10 Sekunden mit 320er Schleifpapier trocken geschliffen. Der Staub wurde danach abgeblasen bzw. abgepinselt. Die Probekörper wurden zunächst sieben Tage bei 20°C unter Wasser und danach 13 Tage lang im Trockenofen bei 50°C bei hoher Luftaustauschrate gelagert. Die Probekörper wurden dann 24 Stunden lang bei 20°C /65% r.F. abgekühlt.

### 4. Nullmessung (m_{kd})

Nach der Vorlagerung wurden die Probekörper gewogen (m_{kd}). Die Nullmessung erfolgt direkt nach der Abkühlung.

### 5. Hauptlagerung

Die Probekörper wurden in eine mit Wasser befüllte Wanne auf Dreikantleisten gestellt. Die Eintauchtiefe der Prismen betrug dabei 5 ± 1 mm. Der Wasserstand wurde über den gesamten Beobachtungszeitraum konstant gehalten.

### 6. Prüfung

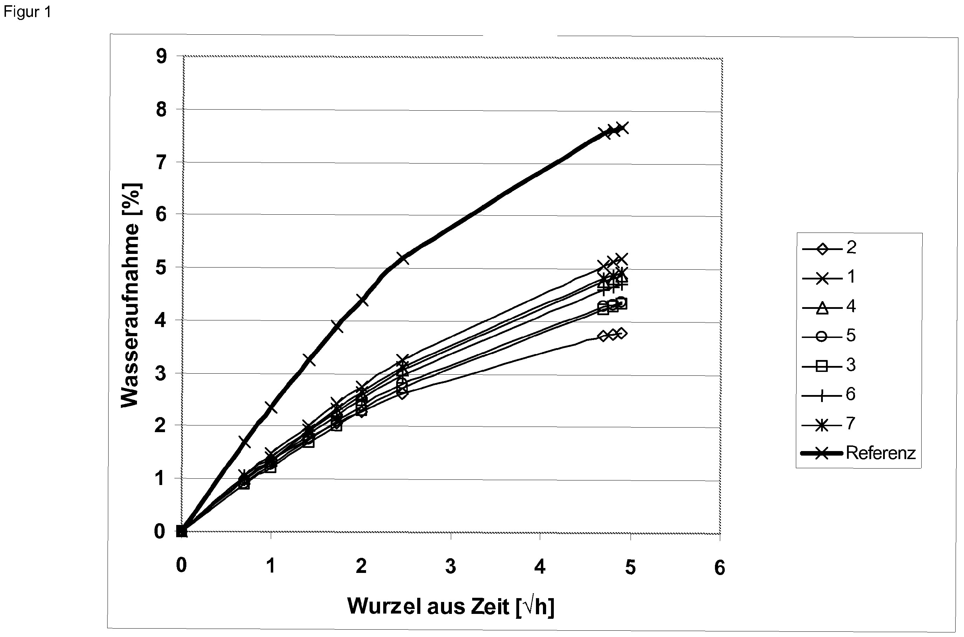

Der Messbeginn zur Ermittlung der kapillaren Wasseraufnahme ist der Zeitpunkt des Eintauchens der Prismen in das Wasserbad. Die Proben wurden nach 30min, 1h, 2h, 3h, 4h, 6h, 22h, 23h und 24h geprüft. Zur Prüfung wurden die Prismen mattfeucht abgewischt, gewogen und dann wieder in das Wasserbad zurückgestellt. Der Messwerte der sechs Prismen pro Fließmittel wurden gemittelt (siehe Tabelle 3) und sind in Figur 1 gegen die Zeit (Wurzel) aufgetragen.

**Tabelle 3**

| | Verwendetes Fließmittel, Dosierung = 0,2 Gew.-% Wirkstoff bezogen auf Zement | | | | | | | |
|---|---|---|---|---|---|---|---|---|
| | 1 | 2 | 3 | 4 | 5 | 6 | 7 | Referenz |
| Zeit (Wurzel) | Prozentuale Wasseraufnahme | | | | | | | |
| 0 | 0 | 0 | 0 | 0 | 0 | 0 | 0 | 0 |
| 0,71 | 1,06 | 1,01 | 0,90 | 1,00 | 0,91 | 0,97 | 1,05 | 1,70 |
| 1,00 | 1,48 | 1,35 | 1,22 | 1,36 | 1,26 | 1,33 | 1,41 | 2,36 |
| 1,41 | 2,02 | 1,76 | 1,68 | 1,91 | 1,74 | 1,84 | 1,94 | 3,26 |
| 1,73 | 2,43 | 2,06 | 2,02 | 2,29 | 2,09 | 2,20 | 2,32 | 3,88 |
| 2,00 | 2,76 | 2,28 | 2,30 | 2,60 | 2,37 | 2,52 | 2,64 | 4,40 |
| 2,45 | 3,26 | 2,62 | 2,72 | 3,07 | 2,80 | 2,97 | 3,11 | 5,18 |
| 4,69 | 5,07 | 3,73 | 4,24 | 4,76 | 4,28 | 4,60 | 4,82 | |
| 4,80 | 5,12 | 3,75 | 4,29 | 4,82 | 4,32 | 4,65 | 4,87 | 7,63 |
| 4,90 | 5,18 | 3,79 | 4,33 | 4,87 | 4,36 | 4,70 | 4,92 | 7,68 |

Wie aus der Tabelle 3 und Figur 1 deutlich ersichtlich ist, wird bei Verwendung der erfindungsgemäßen Polykondensate die kapillare Wasseraufnahme gegenüber der mit dem Referenzmittel hergestellten Prismen deutlich reduziert.

## Patentansprüche

1. Polykondensationsprodukt auf Basis von Aromaten und/oder Heteroaromaten und Aldehyden, **dadurch gekennzeichnet, dass** es
a) mindestens eine eine Polyisobutylenseitenkette und einen Aromaten oder Heteroaromaten aufweisende Struktureinheit (I) sowie
b) mindestens eine eine ionisierbare, funktionelle Gruppe und einen Aromaten oder Heteroaromaten aufweisende Struktureinheit (II) enthält,
wobei Struktureinheit (I) ungleich Struktureinheit (II) ist und der eingesetzte Aldehyd keine Säure oder Esterfunktionen aufweist.

2. Polykondensationsprodukt nach Anspruch 1, **dadurch gekennzeichnet, dass** es die Struktureinheit (I) zwischen 0,01 und 99,9 Gew.-% und die Struktureinheit (II) zwischen 0,01 und 99,9 Gew.-% enthält.

3. Polykondensationsprodukt nach Anspruch 1 oder 2, **dadurch gekennzeichnet, dass** die Struktureinheit (I) durch folgende allgemeine Formel repräsentiert wird 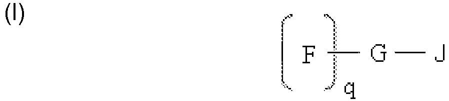
mit
G gleich oder verschieden sowie repräsentiert durch eine substituierte oder unsubstituierte aromatische oder heteroaromatische Verbindung mit 4 bis 12 C-Atomen, bevorzugt 5 bis 10 C-Atomen,
mit
q = 0 bis 4
mit
F unabhängig voneinander gleich oder verschieden sowie repräsentiert durch OH, OR¹, NH₂, NHR¹, NR¹₂, C₁-C₁₀-Alkyl, SO₃H, COOH, PO₃H₂, OPO₃H₂, wobei die C₁-C₁₀-Alkylreste wiederum Phenyl- oder 4-Hydroxyphenyl-Reste besitzen können und R¹ einen C₁-C₄-Rest bedeutet
mit
J gleich oder verschieden sowie repräsentiert durch eine Polyisobutylenseitenkette.

4. Polykondensationsprodukt nach einem der Ansprüche 1 bis 3, **dadurch gekennzeichnet, dass** es sich bei der Struktureinheit (I) um 4-Polyisobutylenphenol handelt.

5. Polykondensationsprodukt nach einem der Ansprüche 1 bis 4, **dadurch gekennzeichnet, dass** es sich bei der ionisierbaren, funktionellen Gruppe der Struktureinheit (II) um mindestens eine aus der Reihe SO₃H, COOH, PO₃H₂, Dialkylamin, Trialkylammonium und OPO₃H₂ handelt.

6. Polykondensationsprodukt nach einem der Ansprüche 1 bis 4, **dadurch gekennzeichnet, dass** die Struktureinheit (II) durch folgende allgemeine Formeln repräsentiert wird
(II) L-Q-O-M
Q gleich oder verschieden sowie repräsentiert durch eine substituierte oder unsubstituierte aromatische oder heteroaromatische Verbindung mit 4 bis 12 C-Atomen, bevorzugt 5 bis 10 C-Atomen
L gleich oder verschieden sowie repräsentiert durch eine ionisierbare funktionelle Gruppe aus der Reihe SO₃H, COOH, PO₃H₂, OPO₃H₂, Dialkylamin oder Trialkylammonium
O gleich Sauerstoff
M gleich oder verschieden sowie repräsentiert durch H, einen C₁- bis C₁₀-Alkylrest, C₁- bis C₁₀-Hydroxyalkylrest, C₁- bis C₁₀-Carbonsäure, Arylrest oder Heteroarylrest.

7. Polykondensationsprodukt nach einem der Ansprüche 1 bis 4, **dadurch gekennzeichnet, dass** die Struktureinheit (II) durch folgende allgemeine Formeln repräsentiert wird 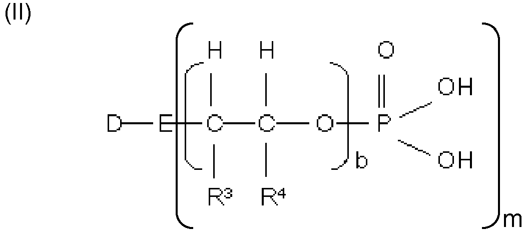
mit
D gleich oder verschieden sowie repräsentiert durch eine substituierte oder unsubstituierte aromatische oder heteroaromatische Verbindung mit 4 bis 12 C-Atomen, bevorzugt 5 bis 10 C-Atomen
mit
E gleich oder verschieden sowie repräsentiert durch N, NH oder O
mit
m = 2 falls E = N und m = 1 falls E = NH oder O
mit
R³ und R⁴ unabhängig voneinander gleich oder verschieden sowie repräsentiert durch einen verzweigten oder unverzweigten C₁- bis C₁₀-Alkylrest, C₅- bis C₈-Cycloalkylrest, Arylrest, Heteroarylrest oder H
mit b
gleich oder verschieden sowie repräsentiert durch eine ganze Zahl von 0 bis 300.

8. Polykondensationsprodukt nach einem der Ansprüche 1 bis 4, **dadurch gekennzeichnet, dass** es sich bei der Struktureinheit (II) um Phenoxyethanolphosphat, N-Phenyldiethanolamindiphosphat, Anisolsulfonsäure, Phenoxyethanolsulfonsäure, Phenolsulfonsäure, Phenoxyessigsäure oder Phenoxypropionsäure handelt.

9. Polykondensationsprodukt nach einem der Ansprüche 1 bis 8, **dadurch gekennzeichnet, dass** dieses mindestens eine weitere Struktureinheit (III) enthält, welche durch folgende allgemeine Formeln repräsentiert wird 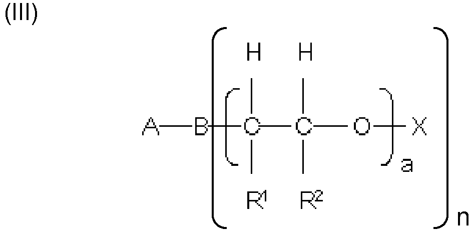
mit
A gleich oder verschieden sowie repräsentiert durch eine substituierte oder unsubstituierte aromatische oder heteroaromatische Verbindung mit 4 bis 12 C-Atomen, bevorzugt 5 bis 10 C-Atomen
mit
B gleich oder verschieden sowie repräsentiert durch N, NH oder O
mit
n = 2 falls B = N und n = 1 falls B = NH oder O
mit
R¹ und R² unabhängig voneinander gleich oder verschieden sowie repräsentiert durch einen verzweigten oder unverzweigten C₁- bis C₁₀-Alkylrest, C₅- bis C₈-Cycloalkylrest, Arylrest, Heteroarylrest oder H
mit
a gleich oder verschieden sowie repräsentiert durch eine ganze Zahl von 1 bis 300
mit X
gleich oder verschieden sowie repräsentiert durch einen verzweigten oder unverzweigten C₁- bis C₁₀-Alkylrest, C₅- bis C₈-Cycloalkylrest, einen verzweigten oder unverzweigten C₁- bis C₁₀-Carbonsäureesterrest, Arylrest, Heteroarylrest oder H.

10. Polykondensationsprodukt nach einem der Ansprüche 1 bis 7 und 9, **dadurch gekennzeichnet, dass** es sich bei dem Aromaten oder Heteroaromaten der Struktureinheit (II) und (III) um Phenyl, 2-Hydroxyphenyl, 3-Hydroxyphenyl, 4-Hydroxyphenyl, 2-Methoxyphenyl, 3-Methoxyphenyl, 4-Methoxyphenyl, Naphthyl, 2-Hydroxynaphthyl, 4-Hydroxynaphthyl, 2-Methoxynaphthyl, 4-Methoxynaphthyl handelt.

11. Polykondensationsprodukt nach einem der Ansprüche 1 bis 10, **dadurch gekennzeichnet, dass** es mindestens eine Struktureinheit (IV) enthält, welche durch folgende allgemeine Formel repräsentiert wird 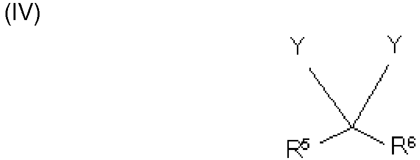
mit
Y unabhängig voneinander gleich oder verschieden und repräsentiert durch (I), (II) oder weitere Bestandteile des Polykondensationsproduktes
mit
R⁵ gleich oder verschieden und repräsentiert durch H, CH₃ oder eine substituierte oder unsubstituierte aromatische oder heteroaromatische Verbindung mit 5 bis 10 C-Atomen
mit
R⁶ gleich oder verschieden und repräsentiert durch H, CH₃ oder eine substituierte oder unsubstituierte aromatische oder heteroaromatische Verbindung mit 5 bis 10 C-Atomen.

12. Polykondensationsprodukt nach einem der Ansprüche 1 bis 11, **dadurch gekennzeichnet, dass** das Polykondensationsprodukt in einem wässrigen System vorliegt, welches 2 bis 90 Gew.-% Wasser und 98 bis 10 Gew.-% Trockenmasse enthält.

13. Polykondensationsprodukt nach einem der Ansprüche 1 bis 12, **dadurch gekennzeichnet, dass** das Polykondensationsprodukt mit einer basischen Verbindung behandelt wird.

14. Verfahren zur Herstellung eines Polykondensationsproduktes nach einem der Ansprüche 1 bis 13, **dadurch gekennzeichnet, dass** die Reaktionsmischung enthaltend
a) mindestens ein aromatisches und/oder heteroaromatisches Monomer mit mindestens einer Polyisobutylenseitenkette,
b) mindestens ein Monomer umfassend eine aromatische und/oder heteroaromatische Gruppe und mindestens eine ionisierbare, funktionelle Gruppe und
c) mindestens ein Monomer umfassend eine Aldehydgruppe in Gegenwart eines Katalysators polykondensiert wird.

15. Verfahren nach Anspruch 14, **dadurch gekennzeichnet, dass** es sich bei dem Katalysator um mindestens eine Sulfonsäure handelt.

16. Verwendung eines Polykondensationsproduktes nach einem der Ansprüche 1 bis 13, als Zusatzmittel für wässrige Suspensionen von hydraulischen und/oder latenthydraulischen Bindemitteln.

## Claims

1. Polycondensation product based on aromatics and/or heteroaromatics and aldehydes, **characterized in that** it contains
a) at least one structural unit (I) having a polyisobutylene side chain and an aromatic or heteroaromatic and
b) at least one structural unit (II) having an ionizable functional group and an aromatic or heteroaromatic,
structural unit (I) differing from structural unit (II) and the aldehyde used having no acid or ester functions.

2. Polycondensation product according to Claim 1, **characterized in that** it contains between 0.01 and 99.9% by weight of the structural unit (I) and between 0.01 and 99.9% by weight of the structural unit (II).

3. Polycondensation product according to Claim 1 or 2, **characterized in that** the structural unit (I) is represented by the following general formula 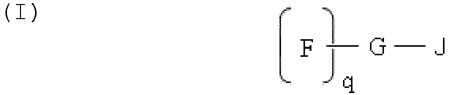
where
G are identical or different and are represented by a substituted or unsubstituted aromatic or heteroaromatic compound having 4 to 12 C atoms, preferably 5 to 10 C atoms,
where
q = 0 to 4
where
F, independently of one another, are identical or different and are represented by OH, OR¹, NH₂, NHR¹, NR¹₂, C₁-C₁₀-alkyl, SO₃H, COOH, PO₃H₂, OPO₃H₂, it being possible for the C₁-C₁₀-alkyl radicals in turn to have phenyl or 4-hydroxyphenyl radicals and R¹ denoting a C₁-C₄-radical,
where
J are identical or different and are represented by a polyisobutylene side chain.

4. Polycondensation product according to any of Claims 1 to 3, **characterized in that** the structural unit (I) is 4-polyisobutylenephenol.

5. Polycondensation product according to any of Claims 1 to 4, **characterized in that** the ionizable functional group of the structural unit (II) is at least one ionizable functional group from the series consisting of SO₃H, COOH, PO₃H₂, dialkylamine, trialkylammonium and OPO₃H₂.

6. Polycondensation product according to any of Claims 1 to 4, **characterized in that** the structural unit (II) is represented by the following general formulae
(II) L-Q-O-M
Q are identical or different and are represented by a substituted or unsubstituted aromatic or heteroaromatic compound having 4 to 12 C atoms, preferably 5 to 10 C atoms,
L are identical or different and are represented by an ionizable functional group from the series consisting of SO₃H, COOH, PO₃H₂, OPO₃H₂, dialkylamine or trialkylammonium,
O is oxygen,
M are identical or different and are represented by H, a C₁- to C₁₀-alkyl radical, C₁- to C₁₀-hydroxyalkyl radical, C₁- to C₁₀-carboxylic acid, aryl radical or heteroaryl radical.

7. Polycondensation product according to any of Claims 1 to 4, **characterized in that** the structural unit (II) is represented by the following general formulae 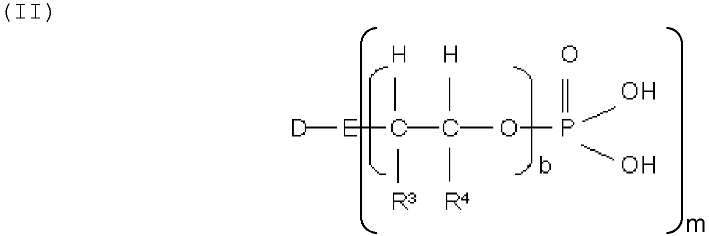
where
D are identical or different and are represented by a substituted or unsubstituted aromatic or heteroaromatic compound having 4 to 12 C atoms, preferably 5 to 10 C atoms,
where
E are identical or different and are represented by N, NH or O,
where
m = 2 if E = N and m = 1 if E = NH or O,
where
R³ and R⁴, independently of one another, are identical or different and are represented by a branched or straight-chain C₁- to C₁₀-alkyl radical, C₅- to C₈-cycloalkyl radical, aryl radical, heteroaryl radical or H,
where b
are identical or different and are represented by an integer from 0 to 300.

8. Polycondensation product according to any of Claims 1 to 4, **characterized in that** the structural unit (II) is phenoxyethanol phosphate, N-phenyldiethanolamine diphosphate, anisolesulphonic acid, phenoxyethanolsulphonic acid, phenolsulphonic acid, phenoxyacetic acid or phenoxypropionic acid.

9. Polycondensation product according to any of Claims 1 to 8, **characterized in that** it contains at least one further structural unit (III) which is represented by the following general formulae 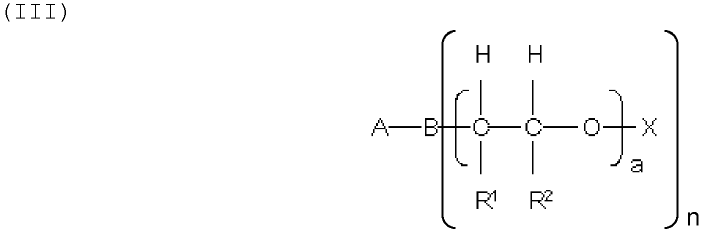
where
A are identical or different and are represented by a substituted or unsubstituted aromatic or heteroaromatic compound having 4 to 12 C atoms, preferably 5 to 10 C atoms,
where
B are identical or different and are represented by N, NH or O,
where
n = 2 if B = N and n = 1 if B = NH or O,
where
R¹ and R², independently of one another, are identical or different and are represented by a branched or straight-chain C₁- to C₁₀-alkyl radical, C₅- to C₈-cycloalkyl radical, aryl radical, heteroaryl radical or H,
where
a are identical or different and are represented by an integer from 1 to 300,
where X
are identical or different and are represented by a branched or straight-chain C₁- to C₁₀-alkyl radical, C₅- to C₈-cycloalkyl radical, a branched or straight-chain C₁- to C₁₀-carboxylic acid ester radical, aryl radical, heteroaryl radical or H.

10. Polycondensation product according to any of Claims 1 to 7 and 9, **characterized in that** the aromatic or heteroaromatic of the structural units (II) and (III) is phenyl, 2-hydroxyphenyl, 3-hydroxyphenyl, 4-hydroxyphenyl, 2-methoxyphenyl, 3-methoxyphenyl, 4-methoxyphenyl, naphthyl, 2-hydroxynaphthyl, 4-hydroxynaphthyl, 2-methoxynaphthyl or 4-methoxynaphthyl.

11. Polycondensation product according to any of Claims 1 to 10, **characterized in that** it contains at least one structural unit (IV) which is represented by the following general formula 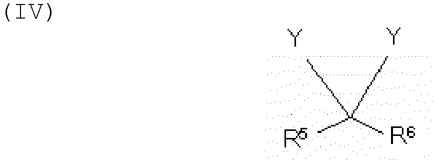
where
Y, independently of one another, are identical or different and are represented by (I), (II) or further constituents of the polycondensation product,
where
R⁵ are identical or different and are represented by H, CH₃ or a substituted or unsubstituted aromatic or heteroaromatic compound having 5 to 10 C atoms,
where
R⁶ are identical or different and are represented by H, CH₃ or a substituted or unsubstituted aromatic or heteroaromatic compound having 5 to 10 C atoms.

12. Polycondensation product according to any of Claims 1 to 11, **characterized in that** the polycondensation product is present in an aqueous system which contains 2 to 90% by weight of water and 98 to 10% by weight of dry matter.

13. Polycondensation product according to any of Claims 1 to 12, **characterized in that** the polycondensation product is treated with a basic compound.

14. Process for the preparation of a polycondensation product according to any of Claims 1 to 13, **characterized in that** the reaction mixture containing
a) at least one aromatic and/or heteroaromatic monomer having at least one polyisobutylene side chain,
b) at least one monomer comprising an aromatic and/or heteroaromatic group and at least one ionizable functional group and
c) at least one monomer comprising an aldehyde group
is subjected to polycondensation in the presence of a catalyst.

15. Process according to Claim 14, **characterized in that** the catalyst is at least one sulphonic acid.

16. Use of a polycondensation product according to any of Claims 1 to 13 as an admixture for aqueous suspensions of hydraulic and/or latently hydraulic binders.

## Revendications

1. Produit de polycondensation à base de composés aromatiques et/ou hétéroaromatiques et d'aldéhydes, **caractérisé en ce qu'**il contient :
a) au moins une unité structurale (I) comprenant une chaîne latérale polyisobutylène et un composé aromatique ou hétéroaromatique, et
b) au moins une unité structurale (II) comprenant un groupe fonctionnel ionisable et un composé aromatique ou hétéroaromatique,
l'unité structurale (I) étant différente de l'unité structurale (II) et l'aldéhyde utilisé ne comprenant pas de fonction acide ou ester.

2. Produit de polycondensation selon la revendication 1, **caractérisé en ce qu'**il contient l'unité structurale
(I) entre 0,01 et 99,9 % en poids et l'unité structurale
(II) entre 0,01 et 99,9 % en poids.

3. Produit de polycondensation selon la revendication 1 ou 2, **caractérisé en ce que** l'unité structurale (I) est représentée par la formule générale suivante : 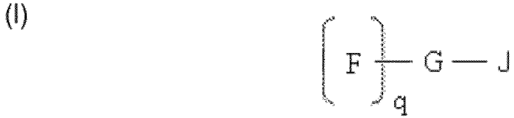 dans laquelle
les G sont identiques ou différents, et représentent un composé aromatique ou hétéroaromatique substitué ou non substitué de 4 à 12 atomes C, de préférence de 5 à 10 atomes C,
q = 0 à 4,
les F sont indépendamment les uns des autres identiques ou différents, et représentent OH, OR¹, NH₂, NHR¹, NR¹₂, alkyle en C₁-C₁₀, SO₃H, COOH, PO₃H₂, OPO₃H₂, les radicaux alkyle en C₁-C₁₀ pouvant eux-mêmes comprendre des radicaux phényle ou 4-hydroxyphényle et R¹ signifiant un radical en C₁-C₄,
les J sont identiques ou différents, et représentent une chaîne latérale polyisobutylène.

4. Produit de polycondensation selon l'une quelconque des revendications 1 à 3, **caractérisé en ce que** l'unité structurale (I) est le 4-polyisobutylène-phénol.

5. Produit de polycondensation selon l'une quelconque des revendications 1 à 4, **caractérisé en ce que** le groupe fonctionnel ionisable de l'unité structurale (II) est au moins un de la série constituée par SO₃H, COOH, PO₃H₂, dialkylamine, trialkylammonium et OPO₃H₂.

6. Produit de polycondensation selon l'une quelconque des revendications 1 à 4, **caractérisé en ce que** l'unité structurale (II) est représentée par la formule générale suivante :
(II) L-Q-O-M
dans laquelle
les Q sont identiques ou différents, et représentent un composé aromatique ou hétéroaromatique substitué ou non substitué de 4 à 12 atomes C, de préférence de 5 à 10 atomes C,
les L sont identiques ou différents, et représentent un groupe fonctionnel ionisable de la série constituée par SO₃H, COOH, PO₃H₂, OPO₃H₂, dialkylamine ou trialkylammonium,
O signifie oxygène,
les M sont identiques ou différents, et représentent H, un radical alkyle en C₁ à C₁₀, un radical hydroxyalkyle en C₁ à C₁₀, un acide carboxylique en C₁ à C₁₀, un radical aryle ou un radical hétéroaryle.

7. Produit de polycondensation selon l'une quelconque des revendications 1 à 4, **caractérisé en ce que** l'unité structurale (II) est représentée par la formule générale suivante : 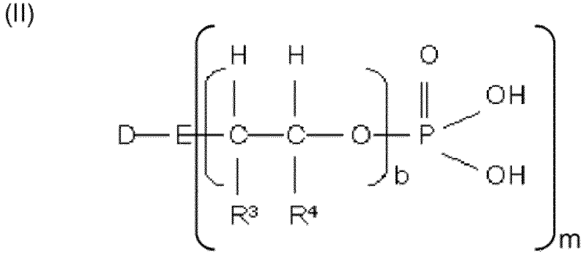 dans laquelle
les D sont identiques ou différents, et représentent un composé aromatique ou hétéroaromatique substitué ou non substitué de 4 à 12 atomes C, de préférence de 5 à 10 atomes C,
les E sont identiques ou différents, et représentent N, NH ou O,
m = 2 si E = N et m = 1 si E = NH ou O,
les R³ et R⁴ sont indépendamment les uns des autres identiques ou différents, et représentent un radical alkyle en C₁ à C₁₀ ramifié ou non ramifié, un radical cycloalkyle en C₅ à C₈, un radical aryle, un radical hétéroaryle ou H,
les b sont identiques ou différents, et représentent un nombre entier de 0 à 300.

8. Produit de polycondensation selon l'une quelconque des revendications 1 à 4, **caractérisé en ce que** l'unité structurale (II) est le phosphate de phénoxyéthanol, le diphosphate de N-phényldiéthanolamine, l'acide anisole-sulfonique, l'acide phénoxyéthanolsulfonique, l'acide phénolsulfonique, l'acide phénoxyacétique ou l'acide phénoxypropionique.

9. Produit de polycondensation selon l'une quelconque des revendications 1 à 8, **caractérisé en ce que** celui-ci contient au moins une unité structure supplémentaire (III), qui est représentée par la formule générale suivante : 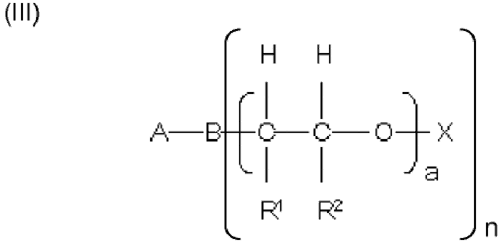 dans laquelle
les A sont identiques ou différents, et représentent un composé aromatique ou hétéroaromatique substitué ou non substitué de 4 à 12 atomes C, de préférence de 5 à 10 atomes C,
les B sont identiques ou différents, et représentent N, NH ou O,
n = 2 si B = N et n = 1 si B = NH ou O,
les R¹ et R² sont indépendamment les uns des autres identiques ou différents, et représentent un radical alkyle en C₁ à C₁₀ ramifié ou non ramifié, un radical cycloalkyle en C₅ à C₈, un radical aryle, un radical hétéroaryle ou H,
les a sont identiques ou différents, et représentent un nombre entier de 1 à 300,
les X sont identiques ou différents, et représentent un radical alkyle en C₁ à C₁₀ ramifié ou non ramifié, un radical cycloalkyle en C₅ à C₈, un radical ester d'acide carboxylique en C₁ à C₁₀ ramifié ou non ramifié, un radical aryle, un radical hétéroaryle ou H.

10. Produit de polycondensation selon l'une quelconque des revendications 1 à 7 et 9, **caractérisé en ce que** le composé aromatique ou hétéroaromatique des unités structurales (II) et (III) est un phényle, 2-hydroxyphényle, 3-hydroxyphényle, 4-hydroxyphényle, 2-méthoxyphényle, 3-méthoxyphényle, 4-méthoxyphényle, naphtyle, 2-hydroxynaphtyle, 4-hydroxynaphtyle, 2-méthoxynaphtyle, 4-méthoxynaphtyle.

11. Produit de polycondensation selon l'une quelconque des revendications 1 à 10, **caractérisé en ce qu'**il contient au moins une unité structurale (IV), qui est représentée par la formule générale suivante : 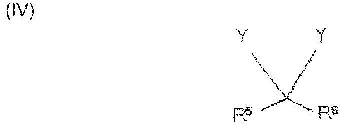 dans laquelle
les Y sont indépendamment les uns des autres identiques ou différents, et représentent (I), (II) ou d'autres constituants du produit de polycondensation,
les R⁵ sont identiques ou différents, et représentent H, CH₃ ou un composé aromatique ou hétéroaromatique substitué ou non substitué de 5 à 10 atomes C,
les R⁶ sont identiques ou différents, et représentent H, CH₃ ou un composé aromatique ou hétéroaromatique substitué ou non substitué de 5 à 10 atomes C.

12. Produit de polycondensation selon l'une quelconque des revendications 1 à 11, **caractérisé en ce que** le produit de polycondensation se présente dans un système aqueux, qui contient 2 à 90 % en poids d'eau et 98 à 10 % en poids de masse sèche.

13. Produit de polycondensation selon l'une quelconque des revendications 1 à 12, **caractérisé en ce que** le produit de polycondensation est traité avec un composé basique.

14. Procédé de fabrication d'un produit de polycondensation selon l'une quelconque des revendications 1 à 13, **caractérisé en ce que** le mélange réactionnel contenant :
a) au moins un monomère aromatique et/ou hétéroaromatique comprenant au moins une chaîne latérale polyisobutylène,
b) au moins un monomère comprenant un groupe aromatique et/ou hétéroaromatique et au moins un groupe fonctionnel ionisable et
c) au moins un monomère comprenant un groupe aldéhyde, est polycondensé en présence d'un catalyseur.

15. Procédé selon la revendication 14, **caractérisé en ce que** le catalyseur consiste en au moins un acide sulfonique.

16. Utilisation d'un produit de polycondensation selon l'une quelconque des revendications 1 à 13 en tant qu'additif pour des suspensions aqueuses de liants hydrauliques et/ou hydrauliques latents.
